# EUROPEAN PATENT APPLICATION

(11) **EP 4 429 222 A1**
(43) Date of publication of application: **11.09.2024**
(21) Application number: 22889618.9
(22) Date of filing: 13.07.2022
(51) Int. Cl.: H04N 1/028, H04N 1/04, H04N 1/19, G03B 27/50

(54) **OPTICAL UNIT AND OPTICAL LINE SENSOR HAVING SAME**

(30) Priority: 05.11.2021 JP 2021181088
(71) Applicant: Vienex Corporation, Kanonji-shi, Kagawa 768-0021 (JP)
(72) Inventor: RYUMAN, Kazuaki, Kanonji-shi, Kagawa 768-0021 (JP)
(74) Representative: Mewburn Ellis LLP
(86) International application number: PCT/JP2022/027520
(87) International publication number: WO 2023/079793

(57) **Abstract**

An optical unit (light receiving unit 3) is an optical unit for guiding light to a light receiving element 32 provided along a main scanning direction (X direction), and includes an image forming lens 31 and a pair of holding members 35 and 36. The image forming lens 31 transmits light and forms an image on the light receiving element 32. A pair of the holding members 35 and 36 holds the image forming lens 31. The image forming lens 31 has an elongated shape along the main scanning direction, and is sandwiched in a state of being pressed by a pair of the holding members 35 and 36 arranged along the main scanning direction.

## Description

### TECHNICAL FIELD

The present invention relates to an optical unit for guiding light to a light receiving element provided along a main scanning direction, and an optical line sensor including the optical unit.

### BACKGROUND ART

For example, there is known an optical line sensor that irradiates an object such as a printed matter or a functional film with light and receives transmitted light or reflected light from the object by a light receiving element. Examples of this type of optical line sensor include a line scan camera and a contact image sensor (CIS).

The optical line sensor includes an image forming lens for forming an image of transmitted light or reflected light from an object on a light receiving element. A rod lens array, which is an example of an image forming lens, is configured in an elongated shape along a main scanning direction with a plurality of rod lenses as image forming elements arranged in the main scanning direction (see, for example, Patent Document 1 below).

### PRIOR ART DOCUMENT

### PATENT DOCUMENT

Patent Document 1: JP 5596803 B2

### SUMMARY OF THE INVENTION

### PROBLEMS TO BE SOLVED BY THE INVENTION

In the optical line sensor disclosed in Patent Document 1, a frame body that accommodates each component of the optical line sensor is divided into two frames. Further, a rod lens array is fixed to one of the frames by using an adhesive, and the other one of the frames is arranged so as not to contact the rod lens array. This is a configuration for preventing influence on the rod lens array in a case where the two frames are shifted and coupled, but on the other hand, this causes another problem.

First, in a configuration in which the rod lens array is fixed only to one frame, firm fixing is not guaranteed, and thus, reliability of fixation of the rod lens array is low. Further, in a case where the rod lens array is fixed using an adhesive, work takes time and effort. Furthermore, since a shape of a frame body is complicated because, for example, a filling groove to be filled with an adhesive needs to be formed in one frame, manufacturing cost is high.

The present invention has been made in view of the above circumstances, and an object of the present invention is to provide an optical unit having high reliability for fixation of an image forming lens, and an optical line sensor including the optical unit.

Further, an object of the present invention is to provide an optical unit that facilitates work of fixing an image forming lens and an optical line sensor including the optical unit.

Furthermore, an object of the present invention is to provide an optical unit for which manufacturing cost can be reduced and an optical line sensor including the optical unit.

### MEANS FOR SOLVING THE PROBLEMS

(1) An optical unit according to the present invention is an optical unit for guiding light to a light receiving element provided along a main scanning direction. The optical unit includes an image forming lens and a pair of holding members. The image forming lens transmits light to form an image on the light receiving element. A pair of the holding members hold the image forming lens. The image forming lens has an elongated shape along the main scanning direction, and is sandwiched in a state of being pressed by a pair of the holding members arranged along the main scanning direction.

According to such a configuration, since the image forming lens having an elongated shape along the main scanning direction is sandwiched in a state of being pressed by a pair of the holding members arranged along the main scanning direction, firm fixation is guaranteed, and reliability of fixation of the image forming lens is improved.

Further, since firm fixation of the image forming lens is guaranteed without use of an adhesive, work of fixing the image forming lens is easier than a case of using an adhesive.

Furthermore, since it is not necessary to employ a complicated configuration for fixing the image forming lens, manufacturing cost can be reduced.

(2) The optical unit may further include a light receiving substrate. The light receiving substrate may be mounted with the light receiving element and fixed to a pair of the holding members.

According to such a configuration, since the light receiving substrate is fixed so as to extend to a pair of the holding members to which the image forming lens is firmly fixed, positional accuracy between the light receiving element mounted on the light receiving substrate and the image forming lens can be accurately maintained.

(3) Each of a pair of the holding members may be formed to have an L-shaped cross section in which a first plate portion and a second plate portion extending along the main scanning direction are connected.

According to such a configuration, since a pair of the holding members can be formed by use of an inexpensive material having an L-shaped cross section, manufacturing cost can be reduced.

(4) In a state where a pair of the holding members sandwich the image forming lens, the first plate portion of one of the holding members and the first plate portion of another one of the holding members may face each other to sandwich the image forming lens, and the second plate portion of one of the holding members and the second plate portion of another one of the holding members may be located on the same plane, so that a pair of the holding members may be arranged to have a T-shaped cross section.

According to such a configuration, in a state where the image forming lens is sandwiched between a pair of the holding members, a pair of the holding members are arranged to have a T-shaped cross section, and an empty space can be formed on the side of each of the first plate portions of a pair of the holding members facing each other. Since other members such as a light source unit can be arranged in this empty space, space saving can be improved.

(5) At least one of a pair of the holding members may be provided with an elastically deformable portion extending along the main scanning direction. In this case, in a state where the image forming lens is sandwiched between a pair of the holding members, the elastically deformable portion may be elastically deformed to abut on the image forming lens.

According to such a configuration, a pair of the holding members are caused to abut on and accurately connected to each other at a portion other than the elastically deformable portion, and the elastically deformable portion is elastically deformed to abut on the image forming lens, so that the image forming lens can be pressed and firmly fixed.

(6) The elastically deformable portion may be elastically deformable about a groove extending in the main scanning direction formed in at least one of a pair of the holding members.

According to such a configuration, the elastically deformable portion can be formed with a simple configuration in which only the groove extending in the main scanning direction is formed, and thus, manufacturing cost can be reduced.

(7) A depth of the groove may vary depending on a position in the main scanning direction.

According to such a configuration, the image forming lens can be uniformly pressed and firmly fixed.

(8) The optical unit may further include a pressing tool that is provided at a central portion in the main scanning direction of the elastically deformable portion and presses the image forming lens.

According to such a configuration, the image forming lens can be uniformly pressed and firmly fixed.

(9) An optical line sensor according to the present invention includes the optical unit and a light source unit that irradiates an object conveyed in a sub-scanning direction with light. Transmitted light or reflected light from the object of light emitted from the light source unit is transmitted through the image forming lens so that an image is formed on the light receiving element.

### EFFECTS OF THE INVENTION

According to the present invention, it is possible to improve reliability for fixation of an image forming lens. Further, according to the present invention, it is easy to perform work of fixing an image forming lens. Furthermore, according to the present invention, manufacturing cost can be reduced.

### BRIEF DESCRIPTION OF THE DRAWINGS

FIG. 1 is a schematic cross-sectional view illustrating a configuration example of an optical line sensor according to an embodiment of the present invention.
FIG. 2 is a perspective view of a light receiving unit.
FIG. 3 is an exploded perspective view of the light receiving unit.
FIG. 4 is a cross-sectional view of the light receiving unit.
FIG. 5 is an enlarged perspective view of a part of the light receiving unit 3.
FIG. 6 is a perspective view illustrating a variation of the light receiving unit 3.

### MODE FOR CARRYING OUT THE INVENTION

### 1. Schematic configuration of optical line sensor

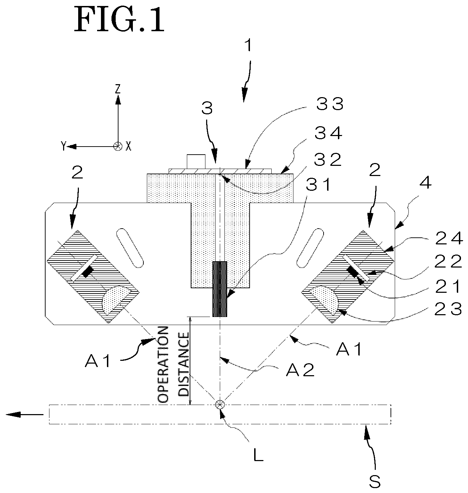

FIG. 1 is a schematic cross-sectional view illustrating a configuration example of an optical line sensor 1 according to an embodiment of the present invention. The optical line sensor 1 obtains image information by reading an object S conveyed in a sub-scanning direction with a reading line L extending in a main scanning direction. Hereinafter, description will be given assuming that the main scanning direction is an X direction, the sub-scanning direction (conveying direction of the object S) is a Y direction, and a direction orthogonal to the X direction and the Y direction is a Z direction.

The optical line sensor 1 includes an illumination unit 2 and a light receiving unit 3. In the present embodiment, the optical line sensor 1 includes two illumination units 2 and one light receiving unit 3. However, the number of the illumination units 2 and the light receiving units 3 is not limited to the number in the present embodiment.

The illumination unit 2 has an elongated shape along the X direction, and irradiates the object S with light along an irradiation optical axis A1 orthogonal to the X direction. Light emitted from the illumination unit 2 is reflected by the object S, and the reflected light is directed to the light receiving unit 3 along a light receiving optical axis A2. The illumination unit 2 constitutes a light source unit that irradiates the object S conveyed in the Y direction with light.

The light receiving unit 3 has an elongated shape along the X direction, and receives reflected light from the object S along the light receiving optical axis A2 orthogonal to the X direction. The light receiving unit 3 includes a plurality of light receiving elements 32 (described later), and photoelectrically converts reflected light received by each of the light receiving elements 32 to obtain an electric signal corresponding to an amount of received light. The light receiving unit 3 constitutes an optical unit for guiding light to the light receiving element 32 provided along the X direction.

The illumination unit 2 and the light receiving unit 3 are connected by a pair of connection members 4 at both end portions in the X direction. By the above, a positional relationship between the illumination unit 2 and the light receiving unit 3 is fixed, and the integrated optical line sensor 1 is constituted. The optical line sensor 1 is fixed at a predetermined angle with respect to a conveyance direction (Y direction) of the object S. In a state in which the optical line sensor 1 is fixed, the light receiving optical axis A2 is, for example, perpendicular to the object S and parallel to the Z direction. On the other hand, the irradiation optical axis A1 is inclined with respect to, for example, a direction (Z direction) perpendicular to the object S.

The illumination unit 2 includes a plurality of LEDs 21, an LED substrate 22, a condenser lens 23, and an illumination housing 24. A plurality of the LEDs 21 are an example of a light source, and emit light along the irradiation optical axis A1 parallel to each other. The LED substrate 22 has an elongated shape along the X direction, and a plurality of the LEDs 21 are mounted in an array in the X direction and energized. That is, the LED substrate 22 constitutes an irradiation substrate on which a light source is mounted and energized. The condenser lens 23 condenses and emits light incident from each of the LEDs 21. The illumination housing 24 has an elongated shape along the X direction, and integrally holds the LED substrate 22 and the condenser lens 23 at a predetermined position. The irradiation optical axis Al is an optical axis of the LED 21 or the condenser lens 23.

The light receiving unit 3 includes an image forming lens 31, a plurality of the light receiving elements 32, a light receiving substrate 33, and a light receiving housing 34. The image forming lens 31 transmits light from the object S along the light receiving optical axis A2 to form an image on a plurality of the light receiving elements 32. A plurality of the light receiving elements 32 receive light by which an image is formed by the image forming lens 31, photoelectrically converts the light, and outputs an electric signal. The light receiving substrate 33 has an elongated shape along the X direction, and a plurality of the light receiving elements 32 are mounted side by side in the X direction and energized. The light receiving housing 34 has an elongated shape along the X direction, and integrally holds the image forming lens 31 and the light receiving substrate 33 at a predetermined position. The light receiving optical axis A2 is an optical axis of a plurality of image forming elements constituting the image forming lens 31, and a line obtained by focusing each image forming element on the light receiving optical axis A2 is the reading line L.

The image forming lens 31 is, for example, a rod lens array. In this case, the image forming lens 31 is constituted in an array shape having an elongated shape along the X direction with a plurality of rod lenses as image forming elements arranged in the X direction. The rod lens is an example of an image forming element of an upright equal magnification image forming type. A typical commercially available rod lens array is SELFOC lens array (registered trademark: NIPPON SHEET GLASS CO., LTD.), and in this case, an operation distance (distance from a lens end surface to a focal point) is limited to 20 mm or less. In a case where the operation distance is 20 mm or less, there is a high probability that the object S comes into contact with a rod lens array and is damaged when being conveyed. Therefore, it is more preferable to use a rod lens array having the operation distance of 30 mm or more. For this purpose, the operation distance is preferably adjusted to 30 mm or more by independently creating a rod lens array having the operation distance of 30 mm or more or appropriately changing a pitch in an optical axis direction of a commercially available rod lens array (operation distance of 20 mm or less). Further, without limitation to a rod lens, a spherical lens, an aspherical lens, a lens group obtained by combining a plurality of these lenses, and the like may be arranged in an array in the X direction to constitute the image forming lens 31.

In the present embodiment, reflected light from the object S of light emitted from the illumination unit 2 is transmitted through the image forming lens 31 so that an image is formed on the light receiving element 32. However, the present invention is not limited to such a configuration, and in a case of a configuration where the illumination unit 2 is arranged on the opposite side of the light receiving unit 3 side with respect to the object S, transmitted light in the object S of light emitted from the illumination unit 2 may be transmitted through the image forming lens 31 so that an image is formed on the light receiving element 32.

### 2. Specific configuration of light receiving unit

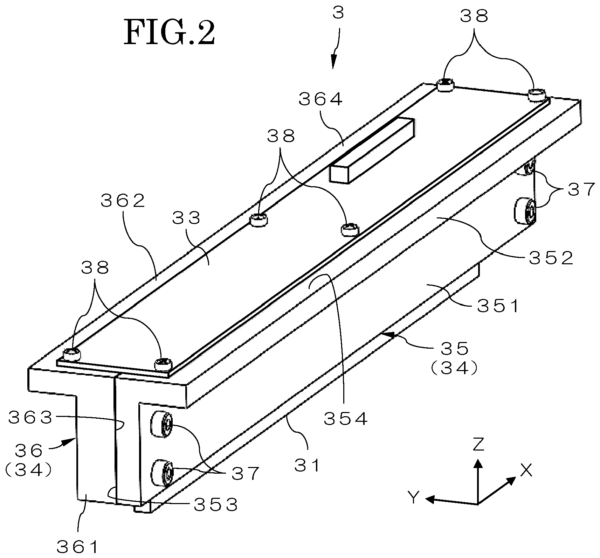

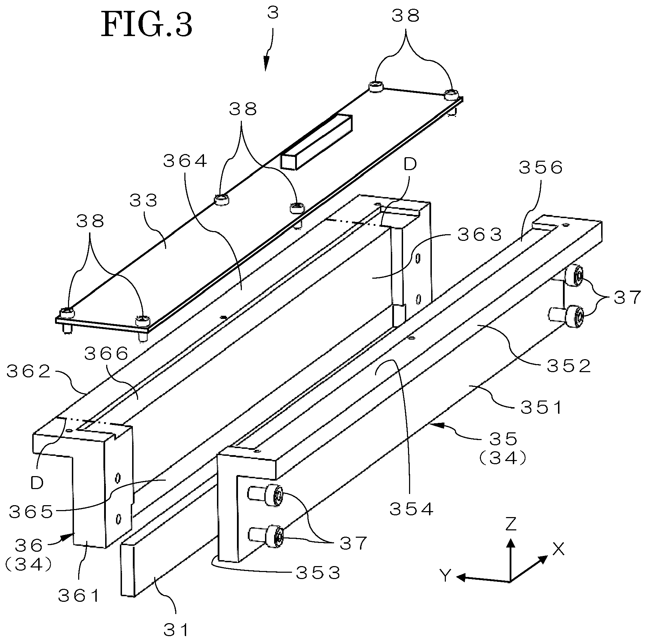

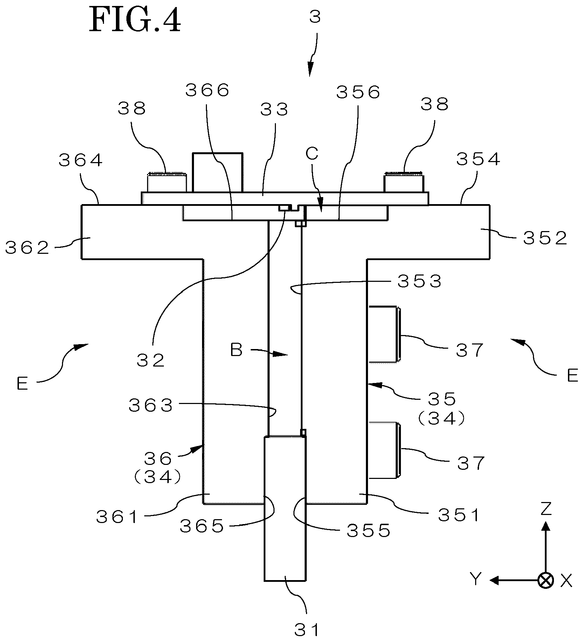

FIG. 2 is a perspective view of the light receiving unit 3. FIG. 3 is an exploded perspective view of the light receiving unit 3. FIG. 4 is a cross-sectional view of the light receiving unit 3. FIG. 4 illustrates a cross section of the light receiving unit 3 taken in a direction orthogonal to the X direction.

The light receiving housing 34 of the light receiving unit 3 includes a pair of holding members (a first holding member 35 and a second holding member 36) that hold the image forming lens 31. The first holding member 35 and the second holding member 36 are arranged along the X direction. That is, the first holding member 35 and the second holding member 36 extend in parallel to the image forming lens 31.

The first holding member 35 has a configuration in which a first plate portion 351 and a second plate portion 352 are connected. The first plate portion 351 of the first holding member 35 is a plate-like member extending in the X direction along a plane (vertical plane) parallel to the X direction and the Z direction. The first plate portion 351 has a facing surface 353 facing the second holding member 36. The facing surface 353 is parallel to the X direction and the Z direction and orthogonal to the Y direction.

The second plate portion 352 of the first holding member 35 is a plate-like member extending in the X direction along a plane (horizontal plane) parallel to the X direction and the Y direction. The second plate portion 352 has a fixing surface 354 to which the light receiving substrate 33 is fixed. The fixing surface 354 is parallel to the X direction and the Y direction and orthogonal to the Z direction.

The first holding member 35 is formed to have an L-shaped cross section as the first plate portion 351 and the second plate portion 352 are connected. Specifically, as an end portion in the Z direction of the first plate portion 351 and an end portion in the Y direction of the second plate portion 352 are connected, the first plate portion 351 and the second plate portion 352 are connected so as to be orthogonal to each other. The first plate portion 351 and the second plate portion 352 may have a configuration in which a separate member is coupled or may have a configuration in which they are integrally formed.

The second holding member 36 has a configuration in which a first plate portion 361 and a second plate portion 362 are connected. The first plate portion 361 of the second holding member 36 is a plate-like member extending in the X direction along a plane (vertical plane) parallel to the X direction and the Z direction. The first plate portion 361 has a facing surface 363 facing the first holding member 35. The facing surface 363 is parallel to the X direction and the Z direction and orthogonal to the Y direction.

The second plate portion 362 of the second holding member 36 is a plate-like member extending in the X direction along a plane (horizontal plane) parallel to the X direction and the Y direction. The second plate portion 362 has a fixing surface 364 to which the light receiving substrate 33 is fixed. The fixing surface 364 is parallel to the X direction and the Y direction and orthogonal to the Z direction.

The second holding member 36 is formed to have an L-shaped cross section as the first plate portion 361 and the second plate portion 362 are connected. Specifically, as an end portion in the Z direction of the first plate portion 361 and an end portion in the Y direction of the second plate portion 362 are connected, the first plate portion 361 and the second plate portion 362 are connected so as to be orthogonal to each other. The first plate portion 361 and the second plate portion 362 may have a configuration in which a separate member is coupled or may have a configuration in which they are integrally formed.

On the facing surface 353 of the first holding member 35, a step surface 355 extending along the X direction is formed at an end portion (lower end portion) on the opposite side to the second plate portion 352 side in the Z direction. The step surface 355 faces the image forming lens 31. However, a surface on the light receiving element 32 side of the image forming lens 31 does not abut on the step surface 355.

On the facing surface 363 of the second holding member 36, a step surface 365 extending along the X direction is formed at an end portion (lower end portion) on the opposite side to the second plate portion 362 side in the Z direction. The step surface 365 faces the image forming lens 31 and has a shape corresponding to a shape of a corner portion facing the step surface 365 of the image forming lens 31. A surface on the light receiving element 32 side of the image forming lens 31 abuts on the step surface 365.

As described above, the step surface 365 of the second holding member 36 abuts on a surface on the light receiving element 32 side of the image forming lens 31, and functions as a reference surface for positioning the image forming lens 31 in the Z direction. For this reason, a distance between an upper surface (surface abutting on a surface on the light receiving element 32 side of the image forming lens 31) of the step surface 365 and the fixing surface 364 requires high dimensional accuracy. This dimensional accuracy is preferably an error of ±0.05 mm or less.

Further, a surface (surface orthogonal to the Y direction) facing a side surface of the image forming lens 31 of the step surface 365 of the second holding member 36 also functions as a reference surface for positioning the image forming lens 31 in the Y direction. Therefore, a surface orthogonal to the Y direction in the step surface 365 needs to be flat with high dimensional accuracy, and degree of flatness (tolerance) of the surface is preferably 0.1 mm or less.

On the other hand, the step surface 355 of the first holding member 35, which does not abut on a surface on the light receiving element 32 side of the image forming lens 31 as described above, does not require dimensional accuracy such as that of the step surface 365 of the second holding member 36 from the viewpoint of positioning the image forming lens 31 in the Z direction. Similarly, a surface (surface orthogonal to the Y direction) facing a side surface of the image forming lens 31 of the step surface 355 of the first holding member 35 does not need to be flat with high dimensional accuracy. Therefore, manufacturing cost of the first holding member 35 can be reduced.

Note that the step surface 355 of the first holding member 35 and the step surface 365 of the second holding member 36 both function as a light shielding surface that does not transmit and blocks unnecessary light.

The first holding member 35 and the second holding member 36 are connected to each other using a connecting tool 37 such as a screw In the present embodiment, both end portions in the X direction of the first holding member 35 and both end portions in the X direction of the second holding member 36 are connected to each other using the connecting tool 37. Specifically, the first holding member 35 and the second holding member 36 are connected as the connecting tool 37 inserted through a through hole formed at both end portions of the first plate portion 361 of the first holding member 35 is fastened to the second holding member 36.

At this time, the image forming lens 31 is arranged between the step surface 355 of the first holding member 35 and the step surface 365 of the second holding member 36, and both end surfaces in the Y direction of the image forming lens 31 are pressed by the step surface 355 and the step surface 365 as the first holding member 35 and the second holding member 36 are connected using the connecting tool 37. By the above, the image forming lens 31 is sandwiched between the first holding member 35 and the second holding member 36 in a state where both end surfaces in the Y direction are pressed by the step surface 355 and the step surface 365. That is, the image forming lens 31 is held only by pressing force of the first holding member 35 and the second holding member 36 without using an adhesive.

As described above, in a state where the first holding member 35 and the second holding member 36 sandwich the image forming lens 31, the first plate portion 351 of the first holding member 35 and the first plate portion 361 of the second holding member 36 face each other to sandwich the image forming lens 31. Further, the second plate portion 352 of the first holding member 35 and the second plate portion 362 of the second holding member 36 are located on the same plane in a plane (horizontal plane) parallel to the X direction and the Y direction.

By the above, as illustrated in FIG. 4, the first holding member 35 and the second holding member 36 connected to each other are arranged to have a T-shaped cross section. In this state, the fixing surface 354 of the first holding member 35 and the fixing surface 364 of the second holding member 36 are located on the same plane. However, the method of connecting the first holding member 35 and the second holding member 36 is not limited to the above method, and another optional method can be employed as long as the method allows the image forming lens 31 to be sandwiched in a state of being pressed by the first holding member 35 and the second holding member 36.

As illustrated in FIG. 4, in a state where the first holding member 35 and the second holding member 36 are connected, an upper portion above the step surface 355 of the facing surface 353 of the first holding member 35 and an upper portion above the step surface 365 of the facing surface 363 of the second holding member 36 face each other with a space B between them. The space B constitutes an optical path for guiding light transmitted through the image forming lens 31 along the Z direction to the light receiving element 32.

The light receiving substrate 33 is fixed to the first holding member 35 and the second holding member 36 using a fixing tool 38 such as a screw. Specifically, one end portion in the Y direction of the light receiving substrate 33 faces the fixing surface 354 of the first holding member 35, and another end portion in the Y direction of the light receiving substrate 33 faces the fixing surface 364 of the second holding member 36. In the present embodiment, the light receiving substrate 33 is fixed to the first holding member 35 and the second holding member 36 as the fixing tool 38 inserted into a through hole formed at at least four corners of the light receiving substrate 33 is fastened to each of the first holding member 35 and the second holding member 36. By the above, the light receiving substrate 33 is fixed in a state of extending to the first holding member 35 and the second holding member 36.

On the fixing surface 354 of the first holding member 35, a step surface 356 is formed in a part of a region facing the light receiving substrate 33. On the fixing surface 364 of the second holding member 36, a step surface 366 is formed in a part of a region facing the light receiving substrate 33. In a state where the first holding member 35 and the second holding member 36 are connected, a space C communicating with the space B is formed by the step surface 356 and the step surface 366. The space C functions as a region for accommodating a component mounted on the light receiving substrate 33.

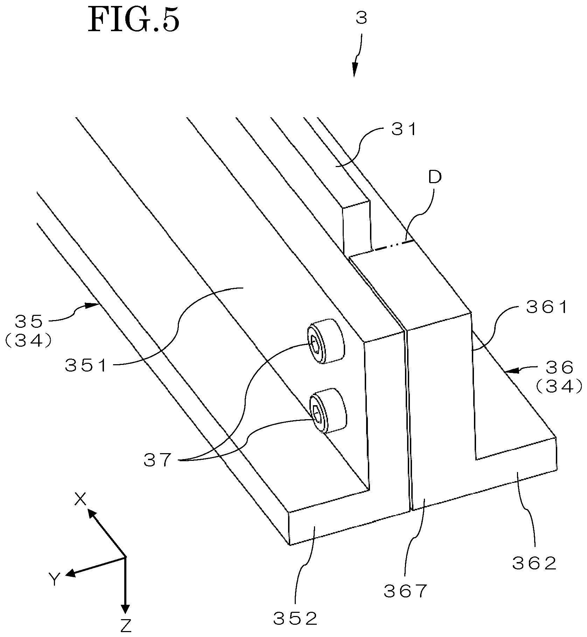

FIG. 5 is an enlarged perspective view of a part of the light receiving unit 3. In the present embodiment, a protruding portion 367 protruding toward the first holding member 35 is formed at both end portions in the X direction of the second holding member 36. That is, the second holding member 36 is formed to have different thicknesses with a boundary line D indicated by a two-dot chain line in FIGS. 3 and 5 as a boundary.

Specifically, a thickness further on the both end portion side than the boundary line D of the first plate portion 361 of the second holding member 36 is formed to be relatively larger than a thickness further on the central portion side than the boundary line D. A difference between these thicknesses, that is, an amount of protrusion of the protruding portion 367 is smaller than a thickness of the image forming lens 31. In a state where the first holding member 35 and the second holding member 36 are connected by fastening the connecting tool 37, a small gap is formed between the first holding member 35 and the second holding member 36 as illustrated in FIG. 5. In an actual use environment, in a case where stray light, intrusion of dust, or the like from this gap becomes a problem, sealing may be performed with curable paste or the like.

In the present embodiment, the protruding portion 367 is formed at both end portions in the X direction of the second holding member 36, but the present invention is not limited to such a configuration, and the second holding member 36 may be constituted by a separate member divided at the boundary line D. In this case, the divided separate members may be connected and used. However, the same configuration may be employed for the first holding member 35 instead of the second holding member 36.

### 3. Variation

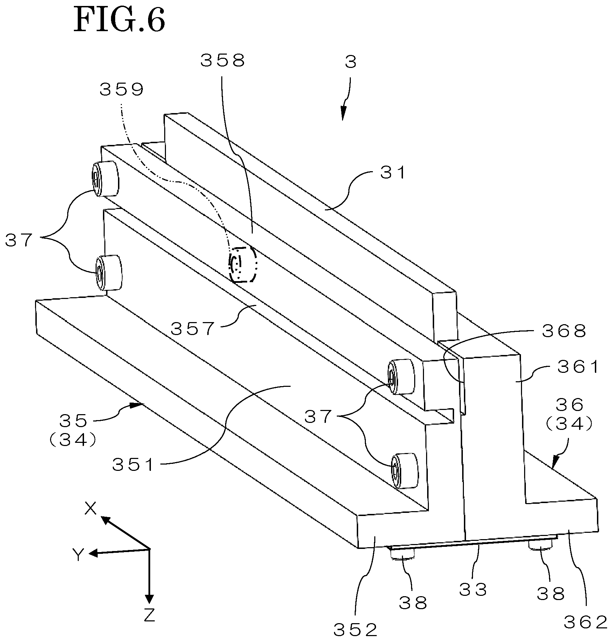

FIG. 6 is a perspective view illustrating a variation of the light receiving unit 3. In this variation, by formation of a groove 357 in the first plate portion 351 of the first holding member 35, an elastically deformable portion 358 extending along the X direction is formed. Further, a step surface 368 is formed at a position facing the elastically deformable portion 358 on the first plate portion 361 of the second holding member 36. Since configurations other than these configurations are similar to those of the above embodiment, the similar configurations are denoted by the same reference numerals in the drawings, and omitted from detailed description.

The groove 357 is formed in a straight line so as to extend from one end portion to the other end portion in the X direction on a surface on the side opposite to the second holding member 36 side of the first plate portion 351 of the first holding member 35. By the above, a portion further on the tip side (side opposite to the second plate portion 352 side) than the groove 357 of the first plate portion 351 is constituted as the elastically deformable portion 358. That is, the elastically deformable portion 358 is elastically deformable about the groove 357 in a direction of approaching the second holding member 36.

The elastically deformable portion 358 is connected to the second holding member 36 using the connecting tool 37. Specifically, the elastically deformable portion 358 approaches the second holding member 36 side as the connecting tool 37 inserted into a through hole formed at both end portions in the X direction of the elastically deformable portion 358 is fastened to the first plate portion 361 (step surface 368) of the second holding member 36. By the above, in a state where the image forming lens 31 is sandwiched between the first holding member 35 and the second holding member 36, the elastically deformable portion 358 elastically deforms and abuts on the image forming lens 31 as illustrated in FIG. 6.

However, the elastically deformable portion 358 may be provided in the second holding member 36 instead of the first holding member 35, or the elastically deformable portion 358 may be provided in both the first holding member 35 and the second holding member 36. Further, the configuration is not limited to the configuration in which the groove 357 is formed, and the elastically deformable portion 358 may be formed by another configuration.

In the above variation, the elastically deformable portion 358 is elastically deformed in a direction of approaching the second holding member 36 by force acting on both end portions in the X direction, and abuts on the image forming lens 31. For this reason, in a case where a cross-sectional coefficient of the elastically deformable portion 358 is uniform in the X direction, at a portion closer to a central portion in the X direction of the elastically deformable portion 358, an amount of deformation (distance of approaching the second holding member 36) is smaller and the elastically deformable portion 358 is less likely to abut on the image forming lens 31. As a result, the image forming lens 31 is not uniformly pressed against a reference surface (step surface 365) provided on the second holding member 36, and there is a possibility that straightness of the reading line L is not secured.

In view of the above, the configuration may be such that the elastically deformable portion 358 has a cross-sectional coefficient that is non-uniform in the X direction. Specifically, a cross-sectional coefficient of the elastically deformable portion 358 may be configured to decrease toward a central portion in the X direction of the elastically deformable portion 358. In this case, for example, it is conceivable to form the groove 357 having a depth that becomes larger toward a central portion in the X direction. Note that the central portion is a concept including not only the center in the X direction of the groove 357 but also the vicinity of the center. However, the configuration is not limited to the configuration in which the groove 357 is formed so as to be deeper toward a central portion in the X direction as long as the groove 357 is formed so as to have a different depth depending on a position in the X direction.

Further, as another method, it is conceivable to provide a pressing tool for pressing the image forming lens 31 toward the second holding member 36 side separately from the connecting tool 37. As the pressing tool, for example, as indicated by a two-dot chain line in FIG. 6, at least one set screw 359 may be provided at a central portion in the X direction of the elastically deformable portion 358. Note that the central portion is a concept including not only the center in the X direction of the elastically deformable portion 358 but also the vicinity of the center. The set screw 359 is provided so as to penetrate the elastically deformable portion 358 in the Y direction, and as the set screw 359 is fastened, a tip portion of the set screw 359 can press the image forming lens 31 toward the second holding member 36 side. In this case, the elastically deformable portion 358 may have a uniform cross-sectional coefficient in the X direction.

Note that, in a case where the set screw 359 as described above is provided, if a fastening torque of the set screw 359 is too large, the elastically deformable portion 358 of the first holding member 35 or the entire first holding member 35 may be unnecessarily deformed. For this reason, it is preferable to manage a fastening torque of the set screw 359 to such a magnitude that the above-described unnecessary deformation does not occur.

### 4. Action and effect

(1) In the present embodiment, since the image forming lens 31 having an elongated shape along the scanning direction (X direction) is sandwiched in a state of being pressed by the first holding member 35 and the second holding member 36 arranged along the main scanning direction, firm fixation is guaranteed, and reliability of fixation of the image forming lens 31 is improved.

Further, since firm fixation of the image forming lens 31 is guaranteed without use of an adhesive, work of fixing the image forming lens 31 is easier than a case of using an adhesive.

Furthermore, since it is not necessary to employ a complicated configuration for fixing the image forming lens 31, manufacturing cost can be reduced.

(2) Further, in the present embodiment, since the light receiving substrate 33 is fixed so as to extend to the first holding member 35 and the second holding member 36 to which the image forming lens 31 is firmly fixed, positional accuracy between the light receiving element 32 mounted on the light receiving substrate 33 and the image forming lens 31 can be accurately maintained.

(3) Further, in the present embodiment, since the first holding member 35 and the second holding member 36 can be formed by use of an inexpensive material having an L-shaped cross section, manufacturing cost can be reduced.

(4) Further, in the present embodiment, in a state where the image forming lens 31 is sandwiched between the first holding member 35 and the second holding member 36, the first holding member 35 and the second holding member 36 are arranged to have a T-shaped cross section, and an empty space E (see FIG. 4) can be formed on the side of each of the first plate portions 351 and 361 of the first holding member 35 and the second holding member 36 facing each other. Since other members such as an illumination unit E can be arranged in the empty space E, space saving can be improved.

(5) In the variation illustrated in FIG. 6, the first plate portion 351 of the first holding member 35 and the first plate portion 361 of the second holding member 36 are caused to abut on and accurately connected to each other at a portion other than the elastically deformable portion 358, and the elastically deformable portion 358 is elastically deformed to abut on the image forming lens 31, so that the image forming lens 31 can be pressed and firmly fixed.

(6) Further, in the variation illustrated in FIG. 6, the elastically deformable portion 358 can be formed with a simple configuration in which only the groove 357 extending in the main scanning direction (X direction) is formed, and thus, manufacturing cost can be reduced.

(7) When a depth of the groove 357 varies depending on a position in the main scanning direction (X direction), the image forming lens 31 can be uniformly pressed and firmly fixed.

(8) Further, also when the pressing tool (set screw 359) is provided at a central portion in the main scanning direction (X direction) of the elastically deformable portion 358 to press the image forming lens 31, the image forming lens 31 can be uniformly pressed and firmly fixed.

### DESCRIPTION OF REFERENCE SIGNS

- 1: optical line sensor
- 3: light receiving unit
- 31: image forming lens
- 32: light receiving element
- 33: light receiving substrate
- 35: first holding member
- 36: second holding member
- 351: first plate portion
- 352: second plate portion
- 357: groove
- 358: elastically deformable portion
- 359: set screw
- 361: first plate portion
- 362: second plate portion

## Claims

1. An optical unit for guiding light to a light receiving element provided along a main scanning direction, the optical unit comprising:
an image forming lens that transmits light and forms an image on the light receiving element; and
a pair of holding members that hold the image forming lens,
wherein the image forming lens has an elongated shape along the main scanning direction, and is sandwiched in a state of being pressed by the pair of holding members arranged along the main scanning direction.

2. The optical unit according to claim 1, further comprising a light receiving substrate on which the light receiving element is mounted and which is fixed to the pair of holding members.

3. The optical unit according to claim 1 or 2, wherein each of the pair of holding members is formed to have an L-shaped cross section in which a first plate portion and a second plate portion extending along the main scanning direction are connected.

4. The optical unit according to claim 3, wherein in a state where the pair of holding members sandwich the image forming lens, the first plate portion of one of the holding members and the first plate portion of another one of the holding members face each other to sandwich the image forming lens, and the second plate portion of one of the holding members and the second plate portion of another one of the holding members are located on a same plane, so that the pair of holding members are arranged to have a T-shaped cross section.

5. The optical unit according to any one of claims 1 to 4, wherein at least one of the pair of holding members is provided with an elastically deformable portion extending along the main scanning direction, and in a state where the image forming lens is sandwiched by the pair of holding members, the elastically deformable portion elastically deforms and abuts on the image forming lens.

6. The optical unit according to claim 5, wherein the elastically deformable portion is elastically deformable about a groove extending in the main scanning direction formed in at least one of the pair of holding members.

7. The optical unit according to claim 6, wherein a depth of the groove varies depending on a position in the main scanning direction.

8. The optical unit according to claim 5 or 6, further comprising a pressing tool that is provided at a central portion in the main scanning direction of the elastically deformable portion and presses the image forming lens.

9. An optical line sensor comprising:
the optical unit according to any one of claims 1 to 8; and
a light source unit that irradiates an object conveyed in a sub-scanning direction with light,
wherein transmitted light or reflected light from the object of light emitted from the light source unit is transmitted through the image forming lens, so that an image is formed on the light receiving element.
